# EUROPÄISCHE PATENTSCHRIFT

(11) **EP 0 766 160 B1**
(45) Veröffentlichungstag und Bekanntmachung des Hinweises auf die Patenterteilung: **24.05.2000**
(21) Anmeldenummer: 96113688.4
(22) Anmeldetag: 27.08.1996
(51) Int. Cl.: G05B 21/02, G05B 13/04

(54) **Anordnung zur Beeinflussung einer Regelstrecke**
Device for controlling a control system
Dispositif permettant de contrôler un circuit de contrôle

(30) Priorität: 30.09.1995 DE 19536697
(43) Veröffentlichungstag der Anmeldung: 02.04.1997
(73) Patentinhaber: ROBERT BOSCH GMBH, 70442 Stuttgart (DE)
(72) Erfinder: Leutner, Volkmar, Dipl.-Ing., 71292 Friolzheim (DE); Blumendeller, Wilhelm, Dipl.-Ing., 71691 Freiberg (DE)

(56) Entgegenhaltungen:
- WO-A-93/00622
- US-A- 5 184 127

## Beschreibung

### Stand der Technik

Die Erfindung betrifft eine Anordnung zur Beeinflussung einer Regelstrecke nach der Gattung des Hauptanspruchs. In solchen Regelstrecken wird beispielsweise ein elektrisches Ansteuersignal geringer Leistung in ein hydraulisches Signal hoher Leistung zur Betätigung von mechanischen Stellgliedern oder dergleichen umgesetzt.

Bei einer aus der DE 34 13 959 B1 bekannten Regelanordnung für ein Proportionalventil ist ein als Servoventil bezeichneter Zustandsregler, eine als Servoverstärker gekennzeichnete Regelstrecke sowie ein Geschwindigkeitsrechner vorhanden, der nach einem für sich bekannten Verfahren eine Schätzung von Zustandsvariablen durchführt und somit als sogenannter Zustandsbeobachter fungiert. Der Aufbau und die Funktion dieser Anordnung sind anhand der Figuren 5 und 6 in der DE 34 13 959 B1 beschrieben. Die zu regelnde Größe ist der Ansteuerstrom für die Spule eines Elektromagneten, der im Proportionalventil die Bewegung eines Schiebers bewirkt, mit dem die mechanisch-hydraulisch Stellgröße erzeugbar ist.

Ein Nachteil der bekannten Anordnung mit einer Gewinnung von derartigen Zustandsgrößen liegt darin, daß ein solcher Zustandsbeobachter in der Regel nur für lineare Strecken brauchbare Zustandsgrößen liefert, während beispielsweise hydraulische Strecken üblicherweise durch starke Nichtlinearitäten gekennzeichnet sind. Dieser Nachteil kann auch nicht durch eine größere Verstärkung der Rückführung des Beobachterfehlers ausgeglichen werden. Das Zustandsbeobachtersignal würde hierbei zwar besser an das nichtlineare Verhalten der Regelstrecke angepaßt, jedoch würde es immer mehr dem diskreten Signal des Sensors mitsamt seinen Haltezeiten, in denen das diskrete Signal immer mehr vom tatsächlichen Signal abweicht, nachgebildet. Eine Anwendung dieses Verfahrens setzt somit analoge Sensoren oder Sensoren mit entsprechend kleinen Haltezeiten zur Ermittlung der Regelgröße voraus.

Insbesondere bei proportionalverstellbaren, hydraulischen Komponenten oder Antrieben in solchen Regelanordnungen, die mit einer Lageregelung zur Positionierung beispielsweise eines Hubrings, einer Schwenkscheibe, eines Schiebers oder einer Kolbenstange ausgerüstet sind, werden hierbei analoge und in zunehmender Weise digitale Komponenten verwendet.

Eine solche Zustandsregelung mit digitalen Reglerbausteinen und analogen Sensoren ist beispielsweise im Fachbuch "Regelungen und Steuerungen in der Elektrotechnik", R. Schönfeld, Verlag Technik Berlin/München, 1.Auflage 1993, Seiten 182 bis 186 beschrieben.

### Vorteile der Erfindung

Die erfindungsgemäße Anordnung der eingangs angegebenen Art ist mit den kennzeichnenden Merkmalen des Anspruchs dadurch vorteilhaft, daß ein digitales Sensorausgangssignal gewonnen wird und so aufbereitet werden kann, daß durch geschätzte Zwischenwerte des Sensorsignals auch eine Stabilisierung eines Regelkreises erfolgen kann.

Hierbei ist vor allem verhindert, daß das dynamische Verhalten des geschlossenen Regelkreises in Folge größerer Phasenverschiebung und daraus resultierender geringerer Dämpfung bis hin zur Instabilität des Systems verschlechtert wird, wenn die Haltezeiten von digitalen Sensoren zur Erfassung der Istwerte zu groß sind. Gegenüber einem Regelkreis der auf die Signale eines digitalen Sensors mit langen Haltezezeiten ausgelegt ist, kann bei der Verwendung von geschätzten Zwischenwerten die Regelkreisverstärkung erhöht werden ohne die Stabilität des Regelkreises zu beeinträchtigen.

Insbesondere für einen in der Abtastzeit schnellen Reglerbaustein, und somit kurzen Haltezeiten für die Zwischenwerte, ist die erfindungsgemäße Anordnung vorteilhaft, da die Reserven des digitalen Reglers hinsichtlich der Rechenzeit ansonsten nur zu einem geringen Teil ausgeschöpft werden können. Somit erfolgt hier auch eine verbesserte Nutzung der Vorteile digitaler Reglerbausteine, wobei die üblicherweise verwendeten analogen Sensoren in Verbindung mit A/D-Wandlern zugunsten kostengünstigerer digitaler Sensoren in vorteilhafter Weise ersetzt werden können.

Die Phasenreserve der erfindungsgemäßen Anordnung braucht hier nur so groß gewählt werden, daß im eingeschwungenen Zustand keine Instabilität auftritt. Im Bereich hoher Dynamik, d.h. im Bereich des Einschwingvorgangs, wird der Regelkreis durch die zusätzlich zur Verfügung gestellten geschätzten Werte in Richtung größerer Phasenreserve und damit höherer Dämpfung verschoben.

### Zeichnung

Ein Ausführungsbeispiel der erfindungsgemäßen Anordnung wird anhand der Zeichnung erläutert. Es zeigen:
Figur 1 ein Blockschaltbild eines für sich bekannten Regelkreises mit einem Zustandsbeobachter;
Figur 2 einen typischen Signalverlauf eines analogen und eines digitalen Sensorausgangssignals;
Figur 3 einen Bereich des Signalverlaufs nach Figur 2 mit geschätzten Zwischenwerten;
Figur 4 ein Blockschaltbild eines Reglerbausteins für den Zustandsbeobachter;
Figur 5 einen erweiterten Signalverlauf nach Figur 2 mit mehreren Schätzperioden;
Figur 6 einen erweiterten Reglerbaustein nach Figur 4 und
Figur 7 eine Darstellung des Gradienten eines Signalverlaufs eines Sensorausgangssignals.

### Beschreibung des Ausführungsbeispiels

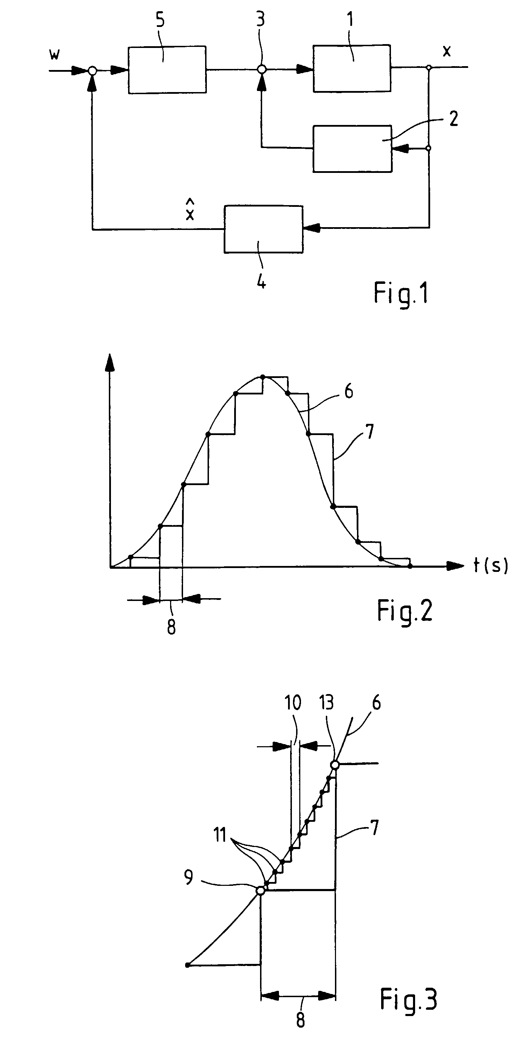

In Figur 1 ist ein Blockschaltbild eines an sich bekannten Regelkreises gezeigt, wie er beispielsweise für die Regelung eines hydraulischen Antriebs in einem Kraftfahrzeug Verwendung findet. Hier ist eine Regelstrecke 1 zur Erzeugung einer Regelgröße oder eines Zustandsvektors vorhanden, der über einen Baustein 2 auf einen Eingang 3 der Regelstrecke 1 zurückgeführt ist. Mit der Regelgröße wird weiterhin ein Zustandsbeobachter-Schaltkreis 4 beaufschlagt, der einen Näherungswert *x̂* erzeugt. Der Näherungswert *x̂* und eine Sollgröße *w* werden über einen Zustandsregler 5 auf den Eingang der Regelstrecke 1 geleitet.

In Figur 2 ist der Verlauf eines analogen Ausgangssignals 6 eines hier nicht dargestellten Sensors gezeigt, das an einem ebenfalls nicht dargestellten Stellglied, an dem das Signal *x* anliegt, in bekannter Weise erfaßt wird. Ein diskretes Ausgangssignal 7 eines digitalen Sensors mit einer entsprechenden Haltezeit 8 für die diskret erfaßten Meßwerte des digitalen Sensors ist dem analogen Ausgangssignal 6 direkt gegenübergestellt. Wird nun anstelle des analogen Signals 6 im geschlossenen Regelkreis nach Figur 1 das nicht kontinuierlich verlaufende, durch eine entsprechende Haltezeit 8 mit danach steilem Anstieg charakterisierte, diskrete Signal 7 zurückgeführt, so führt dies bei gleicher Kreisverstärkung infolge einer reduzierten Phasenreserve zu einer kleineren Dämpfung und zu Überschwingern bzw. im Extremfall zur Instabilität des Regelkreises.

Die erfindungsgemäße Ausbildung der Anordnung zur Beeinflussung einer Regelstrecke wird anhand Figur 3 erläutert. Ausgehend von einem erfaßten Sensorsignal 7 am Punkt 9 werden in Zeitabständen 10, die von der Taktgeschwindigkeit der weiteren digitalen Bausteine in der Anordnung abhängen, Zwischenwerte 11 geschätzt, die einem entsprechenden analogen Signal 6 möglichst nahe kommen und nach Ablauf der Haltezeit 8 des diskreten Sensorsignals am Punkt 9 möglichst das neue, aktuelle Signal am Punkt 13 erreichen.

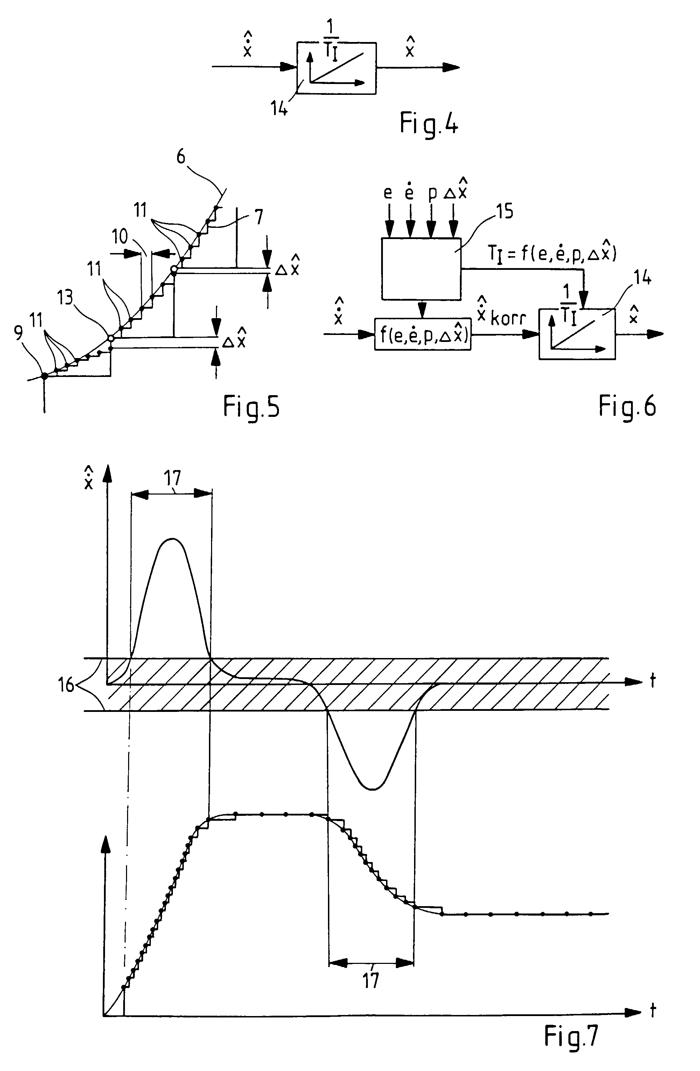

Beim Ausführungsbeispiel nach der Erfindung wird zur Rückführung der Regelgröße *x* im Regelkreis zunächst einmal das exakt gemessene Signal des diskreten Sensors verwendet und nicht ein relativ ungenaues Beobachtersignal nach den bekannten Verfahren. Von diesem diskreten Signal aus (vgl. Punkt 9 in Fig. 3 sowie der erweiterten Darstellung nach Figur 5) wird der Signalwert für den nächsten Zeitpunkt 13 durch einen in Figur 4 gezeigten Regelbaustein 14 als Zustandsbeobachter 1. Ordnung geschätzt.

Die Zwischenwerte 11 nach Figur 5 werden hierbei durch Integration der Eingangswerte erzeugt, wobei die Integrationsschrittweite 10 (entspr. Zeitabstände 10 aus Fig. 3) durch die Rechenzeit der erwähnten digitalen Reglerbausteine, bzw. durch die diskreten Eingangsgrößen des Zustandsbeobachters nach Figur 4, vorgegeben ist. Die Differenz des diskreten Signals 7 zum analogen Signal 6 am Ende der Haltezeit 10 im gesamten Integrationsintervall stellt den Schätzfehler Δ*x̂* dar.

Die Eingangsgröße des Bausteins 14 ist idealerweise der Gradient 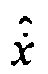 des zu messenden Signals *x*, wie z.B. die Schiebergeschwindigkeit eines hydraulischen Stellglieds bei der zu messenden Schieberposition. Um dieses Eingangssignal für den Reglerbaustein 14 zu erhalten, kann vorzugsweise auf bereits bei einer digitalen Regelung vorhandene und somit ohne zusätzlichen Aufwand zur Verfügung stehende Meßgrößen zurückgegriffen werden oder auch ein separater Zustandsbeobachter eingesetzt werden, dessen diskretes Eingangssignal nur einen geringen Teil der Haltezeit des jeweiligen Sensors betragen sollte.

Für beide Möglichkeiten können besonders vorteilhafte Anwendungsfälle angegeben werden.

Bei vorgesteuerten Systemen wie z.B. bei einer elektrohydraulisch verstellten Pumpe steht der Gradient des Sensorsignals, nämlich der Pumpenexzentrizität mit guter Näherung als Meßgröße in Form des Lagesignals des Vorsteuerventils zur Verfügung. Hier ist also kein aufwendiger Zustandsbeobachter notwendig.

Bei direktgesteuerten Ventilen könnte beispielsweise der gemessene Magnetspulenstrom durch einen separaten Zustandsbeobachter so aufbereitet werden, daß er als Eingangsgröße verwendbar wäre.

Bei jeder Verwendung der oben angegebenen Sensorsignale *x*, die als diskrete Signale vorliegen, gilt jedoch, daß je kleiner das Integrationsintervall 10 ist, um so genauer der exakte Wert des zu schätzenden Sensorsignals bestimmt werden kann und der Schätzfehler Δ*x̂* minimiert werden kann.

Da die so erhaltenen Eingangssignale für den Beobachter 1. Ordnung nach der Figur 4 mehr oder weniger vom idealen Gradienten abweichen, besteht die anhand Figur 6 zu erläuternde Möglichkeit der Hinzuziehung weiterer vorhandener Größen, wie eines aktuellen Regelfehlers *e*, des Gradienten des Regelfehlers *ė* sowie eines Systemdruck p (bei einer Druckregelung), um das Eingangssignal 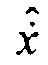 bzw. die Integrationszeitkonstante T_{I} des Bausteins 14 in einem Regelwerk 15 zu korrigieren. Zusätzlich sollte eine zum Zeitpunkt 13 des Einlesens des neuen diskreten Signals vorhandene Differenz zwischen geschätztem und exaktem Wert (Schätzfehler Δ*x̂* nach Figur 5) zur Korrektur der Beobachterparameter bzw. Variablen genutzt werden.

Liegt der neue, exakte Signalwert des digitalen Sensors zum Zeitpunkt 13 (Figur 5) vor, so wird der Ausgang des Bausteins 14 nach Figur 6, d.h. der Anfangswert des Integrators, auf diesen Wert gesetzt. Der Vorteil dieser Maßnahme besteht darin, daß keine Aufsummierung von Beobachtungsfehlern erfolgt, wie es z.B. bei einem bekannten Zustandsbeobachter der Fall wäre. Das so geschätzte Signal nach Figur 5 weist daher einen sehr geringen Schätzfehler Δ*x̂* auf.

In Figur 7 ist im oberen Teil ein typischer Verlauf des Gradienten 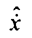 über der Zeit *t* in einem Regelvorgang dargestellt. Um Fehler im eingeschwungenen Zustand der Regelgröße, hervorgerufen durch eine von Null abweichende Eingangsgröße des Integratorbaustein 14 des Beobachters nach Figur 6, zu vermeiden, sind nach Figur 7 Schwellwerte 16 definiert. Hierdurch wird erreicht, daß nur dann das geschätzte Signal des Bausteins 14 verwendet wird, wenn der Gradient 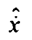 des zu schätzenden Signals außerhalb der vorgegebenen Schwellwerte 16, d.h. im Schätzbereich 17, liegt. Im anderen Fall, d.h. im Bereich relativ kleiner Dynamik, wird nur das diskrete Sensorsignal 7 ohne geschätzte Zwischenwerte zurückgeführt.

## Patentansprüche

1. Anordnung zur Beeinflussung einer Regelstrecke, insbesondere zur Ansteuerung von nichtlinearen Stellgliedern, mit
- Bausteinen (4;14,15) zur Gewinnung von geschätzten Signalen (*x̂*) für eine Regelgröße(*x*), **dadurch gekennzeichnet,** daß
- als Sensor für die Erfassung der vom Stellglied veränderten Größen ein digitaler Sensor verwendet ist, der ein diskretes, digitales Ausgangssignal für die Weiterverarbeitung in digitalen Reglerbausteinen (4,5,14,15) abgibt und daß
- die geschätzten Signale (*x̂*) durch Aufintegration des Gradienten des zu schätzenden Signals (Regelgröße(x)) erzeugbar sind, die jeweils Zwischenwerte (11) innerhalb der Haltezeiten (8) des digitalen Sensors bilden.

2. Anordnung nach Anspruch 1, **dadurch gekennzeichnet,** daß
- die Schrittweiten der Zwischenwerte (11) von der Taktgeschwindigkeit der digitalen Reglerbausteine (4,5,14,15) bestimmt sind.

3. Anordnung nach Anspruch 1 oder 2, **dadurch gekennzeichnet,** daß
- die Zwischenwerte (11) durch eine Verarbeitung der Änderungsgeschwindigkeit (Gradient 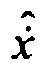 ) des Zustandssignals (*x*)in einem Zustandsbeobachterbaustein 1. Ordnung (14) erfolgt und das derart gewonnene, geschätzte Signal (*x̂*) am Eingang eines Reglerbausteins (5) mit einem Sollwert (w) verglichen wird, wobei das Ausgangssignal des Reglerbausteins (5) auf den Eingang der Regelstrecke (1) geleitet ist.

4. Anordnung nach Anspruch 3, **dadurch gekennzeichnet,** daß
- die Integrationsschrittweite (10) des Zustandsbeobachterbausteins 1.Ordnung (14) der Taktgeschwindigkeit der digitalen Reglerbausteine (4,5,15) entspricht.

5. Anordnung nach Anspruch 3, **dadurch gekennzeichnet,** daß
- die Integrationsschrittweite (10) des Zustandsbeobachterbausteins 1. Ordnung (14) der Taktgeschwindigkeit der diskreten Eingangssignale ( 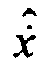 ) entspricht.

6. Anordnung nach einem der vorhergehenden Ansprüche, **dadurch gekennzeichnet,** daß
- das dem Gradienten ( 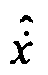 ) entsprechende Signal am Eingang des Zustandsbeobachterbausteins (14) über ein Regelwerk (15) mit Korrektursignalen (*e*, *ė* ,p, Δ*x̂*) beaufschlagbar ist.

7. Anordnung nach einem der vorhergehenden Ansprüche, **dadurch gekennzeichnet,** daß
- das Regelwerk (15) in Abhängigkeit von den Korrektursignalen (*e*, *ė*, p, Δ*x̂*) ein Signal zur Veränderung der Integrationszeitkonstante (T_{I}) des Zustandsbeobachterbausteins (14).

8. Anordnung nach einem der vorhergehenden Ansprüche, **dadurch gekennzeichnet**, daß
- die als geschätzte Signale ( *x̂*) gewonnenen Zwischenwerte (11) nur dann in die Bewertung am Eingang des Reglerbausteins (5) eingehen wenn der Gradienten ( 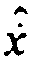 ) des Sensorausgangssignals außerhalb von vorgegebenen Schwellwerten (16) liegt.

9. Anordnung nach einem der vorhergehenden Ansprüche, **dadurch gekennzeichnet**, daß
- bei Vorliegen eines jeweils aktuellen Sensorausgangssignals dieses als Anfangswert für die Gewinnung des jeweils nächsten geschätzten Signals (*x̂*) herangezogen wird.

## Claims

1. Arrangement for controlling a controlled system, in particular for actuating non-linear actuator elements, having
- modules (4; 14, 15) for acquiring estimated signals (*x̂*) for a controlled variable (*x*), characterized in that a digital sensor, which outputs a discrete, digital output signal for further processing in digital controller modules (4, 5, 14, 15), is used as sensor for sensing the variables which are changed by the actuator element, and in that
- the estimated signals (*x̂*) can be generated by integrating the gradient of the signal (controlled variable (*x*)) which is to be estimated and they each form intermediate values (11) within the hold times (8) of the digital sensor.

2. Arrangement according to Claim 1, characterized in that
- the increments of the intermediate values (11) are determined by the clock rate of the digital controller modules (4, 5, 14, 15).

3. Arrangement according to Claim 1 or 2, characterized in that
- the intermediate values (11) are formed by processing the rate of change (gradient 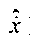 ) of the status signal (*x*) in a status observer module of the 1st order (14), and the estimated signal (*x̂*) which is acquired in this way is compared with a setpoint value (w) at the input of a controller module (5), the output value of the controller module (5) being conducted to the input of the controlled system (1).

4. Arrangement according to Claim 3, characterized in that
- the integration increment (10) of the status observer module of the 1st order (14) corresponds to the clock rate of the digital controller modules (4, 5, 15).

5. Arrangement according to Claim 3, characterized in that
- the integration increment (10) of the status observer module of the 1st order (14) corresponds to the clock rate of the discrete input signals ( 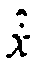 ).

6. Arrangement according to one of the preceding claims, characterized in that
- the signal which corresponds to the gradient ( 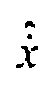 ), at the input of the status observer module (14), can have correction signals (*e*, *ė*,p, Δ*x̂*) by means of a control unit (15).

7. Arrangement according to one of the preceding claims, characterized in that
- the control unit (15) generates a signal for changing the integration time constant (T_{I}) of the status observer module (14) as a function of the correction signals (*e*, *ė*, p, Δ*x̂*).

8. Arrangement according to one of the preceding claims, characterized in that
- the intermediate values (11) which are acquired as estimated signals (*x̂*) are included in the evaluation at the input of the controller module (5) only if the gradient ( 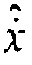 ) of the sensor output signal lies outside the predefined threshold values (16).

9. Arrangement according to one of the preceding claims, characterized in that
- when a respective current sensor output signal is present, it is used as a starting value for the acquisition of the respective next estimated signal (*x̂*).

## Revendications

1. Dispositif servant à influencer un circuit de régulation, en particulier pour commander des organes de commande non linéaires, comprenant des blocs (4 ; 14, 15) servant à obtenir des signaux estimés (x̂) pour une grandeur de régulation (x),
caractérisé en ce que
- on utilise comme détecteur pour la saisie des grandeurs modifiées par l'organe de commande un détecteur numérique, qui délivre un signal de sortie discret, numérique pour le retraitement dans des blocs numériques de régulation (4, 5, 14, 15), et
- les signaux estimés (x̂) peuvent être produits en procédant à l'intégration du gradient du signal à estimer [grandeur de réglage (x)], ces signaux formant des valeurs respectivement intermédiaires (11) à l'intérieur des temps d'arrêt (8) du détecteur numérique.

2. Dispositif selon la revendication 1,
caractérisé en ce que
les largeurs de pas des valeurs intermédiaires (11) sont déterminées par la vitesse de cycle des blocs numériques de régulation (4, 5, 14, 15).

3. Dispositif selon la revendication 1 oui 2,
caractérisé en ce que
les valeurs intermédiaires (11) sont obtenues par un retraitement de la vitesse de variation (gradient 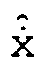 ) du signal d'état (x) dans un bloc d'observateur d'état de premier ordre (14), et le signal obtenu de cette façon, estimé (x̂) est comparé à l'entrée d'un bloc (5) de régulation à une valeur de consigne (w), le signal de sortie du bloc (5) de régulation étant amené à l'entrée du circuit de régulation (1).

4. Dispositif selon la revendication 3,
caractérisé en ce que
la largeur du pas d'intégration (10) du bloc d'observateur d'état de premier ordre (14) correspond à la vitesse du cycle des blocs numériques de régulation (4, 5, 15).

5. Dispositif selon la revendication 3,
caractérisé en ce que
la largeur du pas d'intégration (10) du bloc d'observateur d'état de premier ordre (14) correspond aux signaux d'entrée discrets ( 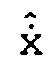 ).

6. Dispositif selon l'une des revendications précédentes,
caractérisé en ce que
le signal qui correspond au gradient ( 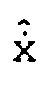 ) peut être amené à l'entrée du bloc (14) de l'observateur d'état par l'intermédiaire d'un système de régulation (15) avec des signaux de correction (e, ė, p, Δx̂).

7. Dispositif selon l'une des revendications précédentes,
caractérisé en ce que
le système de régulation (15) envoie en fonction des signaux de correction (e, ė, p, Δx̂) un signal servant à modifier la constante de temps d'intégration (T_{I}) du bloc (14) de l'observateur d'état.

8. Dispositif selon l'une des revendications précédentes,
caractérisé en ce que
les valeurs intermédiaires (11), obtenues comme signaux estimés (x̂) entrent alors dans la valorisation à l'entrée du bloc (5) de régulation quand le gradient ( 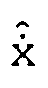 ) du signal d'entrée du détecteur se trouve en dehors de valeurs de seuil prédéfinies (16).

9. Dispositif selon l'une des revendications précédentes,
caractérisé en ce que
chaque signal de sortie actuel existant du détecteur est reconduit comme valeur initiale pour l'obtention du signal respectivement suivant, estimé, (x̂).
